# EUROPÄISCHE PATENTANMELDUNG

(11) **EP 3 719 352 A1**
(43) Veröffentlichungstag der Anmeldung: **07.10.2020**
(21) Anmeldenummer: 19167553.7
(22) Anmeldetag: 05.04.2019
(51) Int. Cl.: F16H 57/01, F16H 57/029, F16H 57/031

(54) **GETRIEBEGEHÄUSE, SENSORMONTAGEKIT UND GETRIEBE**

(71) Anmelder: Flender GmbH, 46395 Bocholt (DE)
(72) Erfinder: Dinter, Ralf Martin, 45888 Gelsenkirchen (DE)
(74) Vertreter: Maier, Daniel Oliver

(57) **Zusammenfassung**

Die Erfindung betrifft ein Getriebegehäuse (1), dadurch gekennzeichnet, dass dieses an seiner Außenseite mit zumindest einer von außen zugänglichen Kabelaufnahmenut (4) versehen ist. Ferner betrifft die Erfindung ein Sensormontagekit zur Montage zumindest eines Sensors (7) an einem Getriebegehäuse (1) sowie ein Getriebe mit einem solchen Getriebegehäuse (1) und zumindest einem an dem Getriebegehäuse (1) unter Verwendung eines solchen Sensormontagekits montierten Sensor (7).

## Beschreibung

Die Erfindung betrifft ein Getriebegehäuse, ein Sensormontagekit zur Montage zumindest eines Sensors an einem solchen Getriebegehäuse sowie ein Getriebe mit einem solchen Getriebegehäuse und zumindest einem an dem Getriebegehäuse unter Verwendung eines solchen Sensormontagekits montierten Sensor.

Im Stand der Technik ist es bekannt, Betriebsparameter von Getriebekomponenten mit geeigneten Sensoren zu überwachen. Beispielhaft sei hier die Temperaturüberwachung von Getriebelagern unter Verwendung geeigneter Temperatursensoren genannt. Hierzu müssen die Temperatursensoren nahe der Getriebelager positioniert und die Sensorkabel unter Verwendung von Kabelrohren im Innern des Getriebegehäuses verlegt, aus diesem herausgeführt und dann an einem Sensor-Gateway oder dergleichen angeschlossen werden. Die Montage ist entsprechend mit großem Zeit- und Kostenaufwand verbunden.

Ausgehend von diesem Stand der Technik ist es eine Aufgabe der vorliegenden Erfindung, die Montage von Sensoren an Getrieben einfach und kostengünstig zu gestalten.

Zur Lösung dieser Aufgabe schafft die vorliegende Erfindung ein Getriebegehäuse, das dadurch gekennzeichnet ist, dass dieses an seiner Außenseite mit zumindest einer von außen zugänglichen Kabelaufnahmenut versehen ist. In einer solchen Kabelaufnahmenut, die sich vorteilhaft entlang derjenigen Positionen erstreckt, an denen Sensoren positioniert werden sollen, lassen sich von außen in einfacher Weise Sensorkabel verlegen, so dass auf den Einsatz von im Getriebeinnern geführten Kabelrohren vollständig verzichtet werden kann. Entsprechend kostengünstig können Sensoren am Getriebe montiert werden.

Vorteilhaft ist die zumindest eine Kabelaufnahmenut gießtechnisch hergestellt. Somit entfällt eine mechanische Bearbeitung des Getriebegehäuses zur Ausbildung der zumindest einen Kabelaufnahmenut, wodurch weitere Kosten eingespart werden können.

Bevorzugt weist die zumindest eine Kabelaufnahmenut einen quadratischen oder rechteckigen Querschnitt auf, was zu einem einfachen Aufbau führt und auch der einfachen Verlegung der Sensorkabel zuträglich ist.

Gemäß einer Ausgestaltung der vorliegenden Erfindung ist das Getriebegehäuse an seiner Außenseite mit zumindest einer von außen zugänglichen Vertiefung versehen, in welche die zumindest eine Kabelaufnahmenut mündet und die zur Aufnahme wenigstens einer elektronischen Komponente ausgelegt ist, beispielsweise zur Aufnahme eines kabellos sendenden Sensor-Gateways. Entsprechend ist auch für eine einfache Montage der elektronischen Komponente Sorge getragen.

Vorteilhaft ist zumindest ein bevorzugt zylindrisch ausgebildeter Sensoreinführkanal vorgesehen, der sich ausgehend vom Boden der Kabelaufnahmenut einwärts erstreckt und insbesondere gießtechnisch hergestellt ist. Der Sensoreinführkanal gibt die spätere Position eines zu montierenden Sensors vor.

Bevorzugt schließt sich an den Sensoreinführkanal ein Sensoraufnahmekanal in Form einer Bohrung an, die mit einem Innengewinde versehen sein kann. Mit anderen Worten ist der Sensoraufnahmekanal, der letztendlich den Sensor aufnehmen soll, ausgehend von dem Sensoreinführkanal durch mechanische Bearbeitung hergestellt. Dies ermöglicht eine sehr genaue Fertigung des Sensoraufnahmekanals und damit eine sehr genaue Positionierung des Sensors bei dessen Montage.

Ferner schafft die vorliegende Erfindung zur Lösung der eingangs genannten Aufgabe ein Sensormontagekit zur Montage zumindest eines Sensors an einem erfindungsgemäßen Getriebegehäuse, umfassend zumindest einen Sensor, zumindest ein an den Sensor angeschlossenes Sensorkabel und mehrere Kabelaufnahmenutabdeckelementen, deren Außenabmessungen derart an die am Getriebegehäuse vorgesehene Kabelaufnahmenut angepasst sind, dass mit ihnen die Kabelaufnahmenut abgedeckt werden kann. Unter Verwendung eines solchen Sensormontagekits lassen sich Sensoren in einfacher Art und Weise am erfindungsgemäßen Getriebegehäuse montieren, indem die Sensoren an der vorgesehen Position montiert werden, die zugehörigen Sensorkabel in der zumindest einen Kabelaufnahmenut angeordnet werden und die Kabelaufnahmenut anschließend mit den Kabelaufnahmenutabdeckelementen abgedeckt bzw. verschlossen wird.

Gemäß einer Ausgestaltung der vorliegenden Erfindung ist der zumindest eine Sensor im Innern einer becherartig ausgebildeten Sensoraufnahmehülse mit zylindrischem Außenumfang wasserdicht aufgenommen, wobei das mit dem Sensor verbundene Sensorkabel zu einer ersten Seite aus der Sensoraufnahmehülse herausgeführt ist. Zum einen ist der Sensor Dank einer solchen Sensoraufnahmehülse vor äußeren Einwirkungen und damit vor Beschädigungen geschützt. Zum anderen lässt sich eine definierte Abmessung aufweisende Sensoraufnahmehülse wesentlich genauer positionieren und einfacher montieren als der einfache Sensor. So lässt sich eine Sensoraufnahmehülse problemlos in einem als Bohrung ausgeführten Sensoraufnahmekanal des Getriebegehäuses einsetzen und beispielsweise einkleben oder einpressen. Die Sensoraufnahmehülse kann aus Metall oder aus Kunststoff hergestellt sein, insbesondere aus einem wärmeleitfähigen Kunststoff, wenn es sich bei dem Sensor um einen Temperatursensor handelt. Die zweite Seite der Sensoraufnahmehülse ist bevorzugt in Form einer kegelförmig zulaufenden Spitze analog zum Sensoraufnahmekanal ausgebildet, wenn dieser als Sackbohrung ausgeführt ist, wodurch ein guter Wärmeübergang gewährleistet werden kann.

Die Sensoraufnahmehülse kann entlang ihres Außenumfangs mit einer Dichtungsringaufnahmenut versehen sein, in die ein Dichtungsring eingesetzt ist, um eine wasserdichte Montage der Sensoraufnahmehülse am Getriebegehäuse zu gewährleisten.

Die Sensoraufnahmehülse ist gemäß einer Ausgestaltung der vorliegenden Erfindung mit einem Außengewinde versehen sein, wobei an der ersten Seite der Sensoraufnahmehülse eine Schraubendreheraufnahmevertiefung ausgebildet ist. Entsprechend kann die Sensoraufnahmehülse mit dem Getriebegehäuse verschraubt werden. Hierzu kann die Sensoraufnahmevertiefung mit einem korrespondierenden Innengewinde ausgeführt sein.

Vorteilhaft sind mehrere Sensoren vorgesehen, an denen Sensorkabel unterschiedlicher Längen angeschlossen sind, beispielsweise vorab definierte Längen von 1, 2, 3, 4 oder 5 m. In Abhängigkeit von der gewünschten Position des Sensors am Getriebegehäuse kann dann ein Sensor mit einem Sensorkabel geeigneter Länge ausgewählt werden. Überschüssiges Sensorkabel lässt sich problemlos in der Kabelaufnahmenut des Getriebegehäuses verstauen. Dank solcher Sensoren mit unterschiedlichen Sensorkabellängen entfällt ein Ablängen des Sensorkabels, wodurch Zeit bei der Montage eingespart werden kann und Fehler bei der Montage vermieden werden können.

Bevorzugt sind sich geradlinig erstreckende Kabelaufnahmenutabdeckelemente vorgesehen, die dazu ausgelegt sind, sich geradlinig erstreckende Abschnitte der Kabelaufnahmenut des Getriebegehäuses abzudecken.

Die geradlinigen Kabelaufnahmenutabdeckelemente umfassen gemäß einer Ausgestaltung der vorliegenden Erfindung im Querschnitt betrachtet zwei sich senkrecht und parallel zueinander erstreckende Seitenwandschenkel, einen sich waagerecht erstreckenden und diese an ihren unteren freien Enden miteinander verbundenen Bodenschenkel, einen sich parallel zu dem Bodenschenkel erstreckenden Abdeckschenkel, der an seiner Unterseite mit dem anderen freien Ende des ersten Seitenwandschenkels verbunden ist und seitlich über beide Seitenwandschenkel vorsteht, und einen mit der Unterseite des Abdeckschenkels verbundenen, sich abwärts von diesem erstreckenden, von außen an dem zweiten Seitenwandschenkel anliegenden dritten Seitenwandschenkel. Mit anderen Worten definieren die sich geradlinig erstreckenden Kabelaufnahmenutabdeckelemente einen durch den seitlichen vorstehenden Abdeckschenkel nach oben verschlossenen Kabelkanal, der seitlich aufgebogen werden kann, um in diesem ein Sensorkabel anzuordnen.

Neben geradlinigen Kabelaufnahmenutabdeckelemente sind vorteilhaft L-förmig oder gebogen ausgebildete Kabelaufnahmenutabdeckelemente vorgesehen, die dazu ausgelegt sind, entsprechende L-förmige oder gebogene Abschnitte der Kabelaufnahmenut abzudecken. Auch die L-förmig oder gebogen ausgebildeten Kabelaufnahmenutabdeckelemente können einen Kabelkanal definieren, in den ein Sensorkabel eingelegt oder eingeschoben werden kann.

Vorteilhaft sind die Kabelaufnahmenutabdeckelemente an ihrem Außenumfang mit seitlich vorstehenden Lippen versehen, über die eine kraftschlüssig Montage und/oder Abdichtung gegenüber den Seitenwänden der Kabelaufnahmenut des Getriebegehäuses erfolgt.

Das Sensormontagekit weist bevorzugt zumindest eine elektronische Komponente auf, insbesondere in Form eines drahtlos sendenden Sensor-Gateway, an deren Außenabmessungen die Abmessungen der Vertiefung des Getriebegehäuses angepasst ist.

Vorteilhaft weist das Sensormontagekit eine Abdeckung zum Abdecken der Vertiefung des Getriebegehäuses auf, die mit seitlich vorstehenden Lippen versehen sein kann.

Ferner schafft die vorliegende Erfindung zur Lösung der eingangs genannten Aufgabe ein Getriebe mit einem erfindungsgemäßen Getriebegehäuse und zumindest einem an dem Getriebegehäuse unter Verwendung eines erfindungsgemäßen Sensormontagekits montierten Sensor.

Weitere Vorteile und Merkmale der vorliegenden Erfindung werden anhand der nachfolgenden Beschreibung unter Bezugnahme auf die beiliegende Zeichnung deutlich. Darin ist
- FIG 1: eine schematische Ansicht eines Getriebegehäuses gemäß einer Ausführungsform der vorliegenden Erfindung, das mit mehreren Sensoren versehen ist;
- FIG 2: eine schematische Schnittansicht eines beispielhaften Sensors eines Sensormontagekits gemäß einer Ausführungsform der vorliegenden Erfindung;
- FIG 3: eine schematische Schnittansicht eines weiteren beispielhaften Sensors eines Sensormontagekits gemäß einer Ausführungsform der vorliegenden Erfindung;
- FIG 4: eine schematische Schnittansicht noch eines weiteren beispielhaften Sensors eines Sensormontagekits gemäß einer Ausführungsform der vorliegenden Erfindung;
- FIG 5: eine Draufsicht des in FIG 4 gezeigten Sensors;
- FIG 6: eine Schnittansicht des in FIG 1 dargestellten Getriebegehäuses, die eine erste mögliche Positionierung eines Sensors zeigt;
- FIG 7: eine weitere Schnittansicht des in FIG 1 dargestellten Getriebegehäuses, die eine zweite mögliche Positionierung eines Sensors zeigt;
- FIG 8: noch eine weitere Schnittansicht des in FIG 1 dargestellten Getriebegehäuses, die eine dritte mögliche Positionierung eines Sensors zeigt;
- FIG 9: eine schematische Teilansicht eines geradlinigen Kabelaufnahmenutabdeckelementes eines Sensormontagekits gemäß einer Ausführungsform der vorliegenden Erfindung;
- FIG 10: eine schematische Ansicht eines L-förmig ausgebildeten Kabelaufnahmenutabdeckelementes eines Sensormontagekits gemäß einer Ausführungsform der vorliegenden Erfindung;
- FIG 11: eine Ansicht einer ersten Variante einer Abdeckung eines Sensormontagekits gemäß einer Ausführungsform der vorliegenden Erfindung und
- FIG 12: eine Ansicht einer zweiten Variante einer Abdeckung eines Sensormontagekits gemäß einer Ausführungsform der vorliegenden Erfindung.

Gleiche Bezugsziffern beziehen sich nachfolgend auf gleiche oder gleichartig ausgebildete Bauteilbereiche.

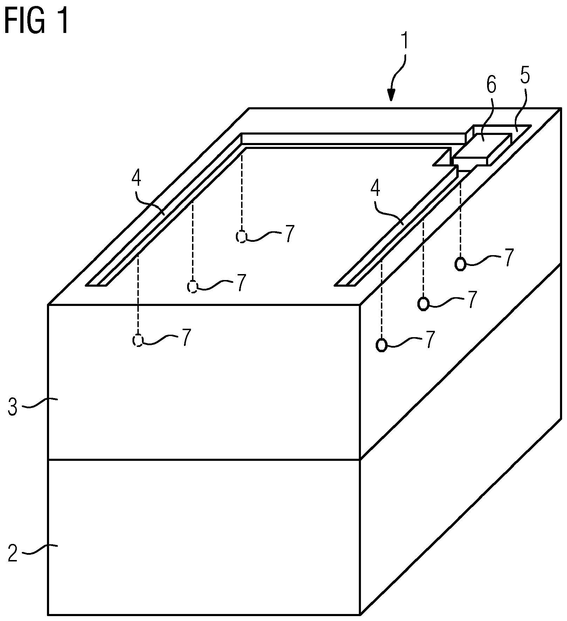

FIG 1 zeigt schematisch ein Getriebegehäuse 1 gemäß einer Ausführungsform der vorliegenden Erfindung, das vorliegend in ein unteres Gehäuseteil 2 und in ein oberes Gehäuseteil 3 unterteilt ist. An seiner Außenseite ist das Getriebegehäuse 1 mit von außen zugänglichen Kabelaufnahmenuten 4 versehen, die vorliegend einen quadratischen Querschnitt aufweisen. Grundsätzlich sind aber auch andere Querschnitte denkbar, insbesondere rechteckige Querschnitte. Die Kabelaufnahmenuten 4 münden in einer Vertiefung 5, die ebenfalls an der Außenseite des Getriebegehäuses 1 vorgesehen und von außen zugänglich ist. die Vertiefung 5 dient zur Aufnahme einer elektronischen Komponente 6, die vorliegend durch einen Sensor-Gateway gebildet wird, der dazu ausgelegt ist, von Sensoren erfasste Signaldaten drahtlos an eine nicht näher dargestellte Datenauswerteeinheit zu übermitteln. Die Kabelaufnahmenuten 4 und die Vertiefung 5 sind gemeinsam mit dem Getriebegehäuse 1 gießtechnisch hergestellt. Grundsätzlich ist es allerdings auch möglich, die Kabelaufnahmenut 4 und die Vertiefung 5 mit einem spanenden oder sonstigen Fertigungsverfahren nachträglich einzubringen.

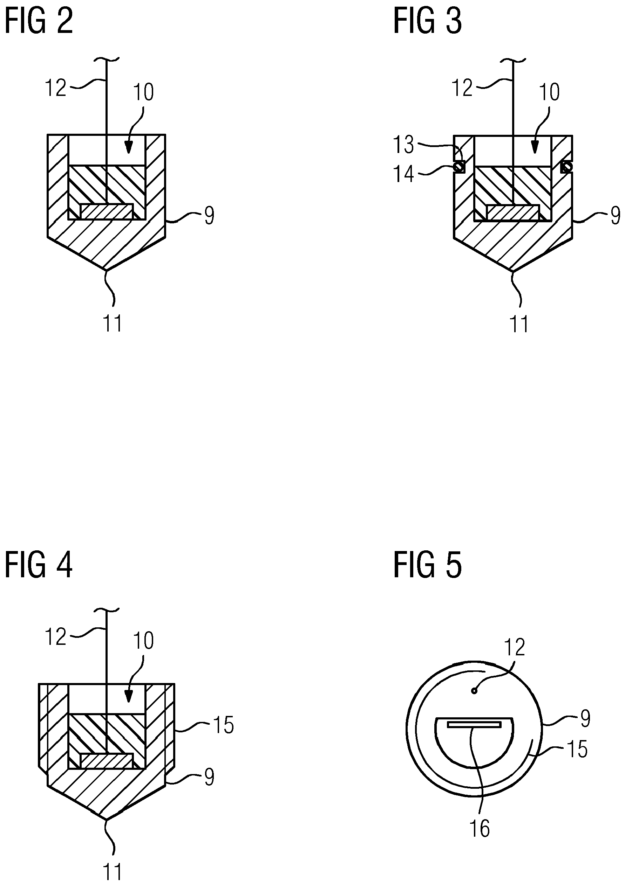

Zur Überwachung von im Inneren des Getriebegehäuses 1 angeordneten Getriebekomponenten sind Sensoren 7 vorgesehen, die in FIG 1 nur schematisch dargestellt sind. Vorliegend überwachen die Sensoren 7 die Temperatur von innerhalb des Getriebegehäuses 1 angeordneten Lagern 8, weshalb sie als Temperatursensoren ausgeführt sind. Grundsätzlich sollte aber klar sein, dass die Art der Sensoren 7 in Abhängigkeit von den zu überwachenden Betriebsparametern frei gewählt werden kann. So kann es sich bei den Sensoren 7 auch um Beschleunigungssensoren und/oder Schwingungssensoren etc. handeln. Gemäß einer Ausführungsform der vorliegenden Erfindung sind die Sensoren 7 im Inneren einer becherartig ausgebildeten Sensoraufnahmehülse 9 mit zylindrischem Außenumfang wasserdicht aufgenommen, die im vorliegenden Fall bevorzugt aus einem Wärme gut leitenden Material hergestellt ist, beispielsweise aus Metall oder einem wärmeleitfähigen Kunststoff. Verschiedene Varianten einer solchen Sensoraufnahmehülse 9 sind in den Figuren 2 bis 5 dargestellt. FIG 2 zeigt eine Sensoraufnahmehülse 9, die einen Sensoraufnahmeraum 10 definiert, der von einer Seite der Sensoraufnahmehülse 9 axial zugänglich ist. Das gegenüberliegende Ende ist mit einer kegelförmig zulaufenden Spitze 11 versehen. in den Sensoraufnahmeraum 10 ist der Sensor 7 eingesetzt, wobei ein an den Sensor angeschlossenes Sensorkabel 12 auswärts aus dem Sensoraufnahmeraum 10 herausgeführt ist. Der Sensor 7 ist beispielsweise unter Verwendung eines Wärme vorteilhaft gut leitenden Harzes im Sensoraufnahmeraum 10 vergossen, so dass er fest an der Sensoraufnahmehülse 9 gehalten ist. FIG 3 zeigt eine Sensoraufnahmehülse 9 mit daran angeordnetem Sensor 7, die sich nur dahingehend von der in FIG 2 dargestellten Variante unterscheidet, dass die Hülse 9 entlang ihres Außenumfangs mit einer Dichtungsringaufnahmenut 13 versehen ist, in die ein Dichtungsring 14 eingesetzt ist. Die in FIG 4 gezeigte Variante unterscheidet sich dahingehend von der in FIG 2 dargestellten Variante, dass die Sensoraufnahmehülse 9 mit einem Außengewinde 15 versehen und dass an der oberen Seite der Sensoraufnahmehülse 9 eine Schraubendreheraufnahmevertiefung 16 ausgebildet ist, um die Sensoraufnahmehülse 9 nach Art einer Schraube handhaben zu können. Es sollte klar sein, dass anstelle der Schraubendreheraufnahmevertiefung 16 auch andere geeignete Werkzeugaufnahmevertiefungen vorgesehen sein können.

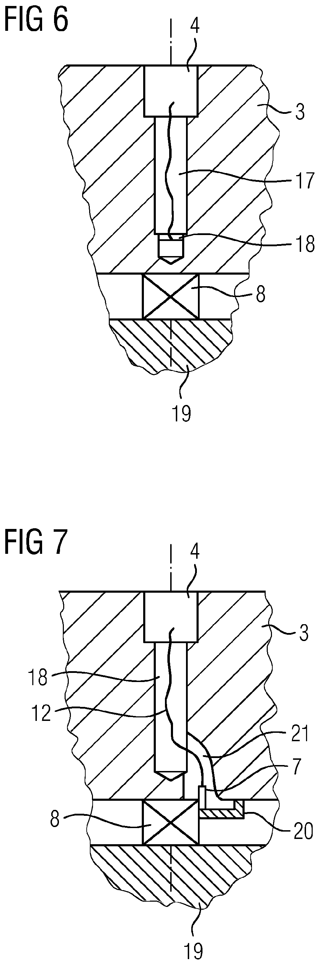

Mögliche Montagesituationen von Sensoren 7 bzw. Sensoraufnahmehülsen 9 sind in den Figuren 6 bis 8 dargestellt.

Gemäß FIG 6 ist ausgehend von einer der in FIG 1 dargestellten Kabelaufnahmenuten 4 des Getriebegehäuses 1 ein vorliegend zylindrisch ausgebildeter Sensoreinführkanal 17 vorgesehen, der bevorzugt ebenso wie die Kabelaufnahmenut 4 gießtechnisch gemeinsam mit dem Getriebegehäuse 1 hergestellt ist. An den Sensoreinführkanal 17 schließt sich ein Sensoraufnahmekanal 18 in Form einer Bohrung an, die vorliegend als Sackbohrung ausgeführt ist. Der Sensoraufnahmekanal 18 endet kurz oberhalb eines innerhalb des Getriebegehäuses 1 auf einer Welle 19 angeordneten Lagers 8. In dem Sensoraufnahmekanal 18 ist ein Sensor 7 angeordnet, der vorliegend in einer Sensoraufnahmehülse 9 gemäß der in FIG 2 dargestellten Variante positioniert ist. Die Form der Spitze 11 der Sensoraufnahmehülse ist vorteilhaft an die Form der Spitze des Sensoraufnahmekanals 18 angepasst, so dass die Spitze 11 flächig an dem Getriebegehäuse 1 anliegt. Ein optimaler Kontakt zwischen der Spitze 11 der Sensoraufnahmehülse 9 und dem Getriebegehäuse 1 kann beispielsweise unter Verwendung eines Wärme gut leitenden Klebstoffes oder einer Thermokontaktpaste erzielt werden. Das Sensorkabel 12 ist aufwärts durch den Sensoreinführkanal 17 zur Kabelaufnahmenut 4 geführt und durch die Kabelaufnahmenut 4 zur elektronischen Komponente 6, an die es angeschlossen ist.

Bei der in FIG 7 dargestellten Variante führt ausgehend von der Kabelaufnahmenut 4 abwärts ein Sensoraufnahmekanal 18, der ebenfalls als Sackbohrung ausgeführt ist und kurz vor einem innerhalb des Getriebegehäuses 1 angeordneten Lager 8 endet, das über einen Haltering 20 in an und für sich bekannter Weise axial gesichert ist. Die Position des Sensoraufnahmekanals 18 ist vorliegend derart gewählt, dass im unteren Bereich des Sensoraufnahmekanals 18 ein Zugang zum Lager 8 über einen Gehäusekanal 21 gegeben ist. Durch diesen Gehäusekanal 21 ist ein Sensor 7 direkt am Lager 8 positioniert. Das Sensorkabel 12 ist aufwärts durch den Gehäusekanal 21 und den Sensoraufnahmekanal 18 in die Kabelaufnahmenut 4 geführt. Von dort aus ist es in der Kabelaufnahmenut 4 zur elektronischen Komponente 6 verlegt, mit der es verbunden ist.

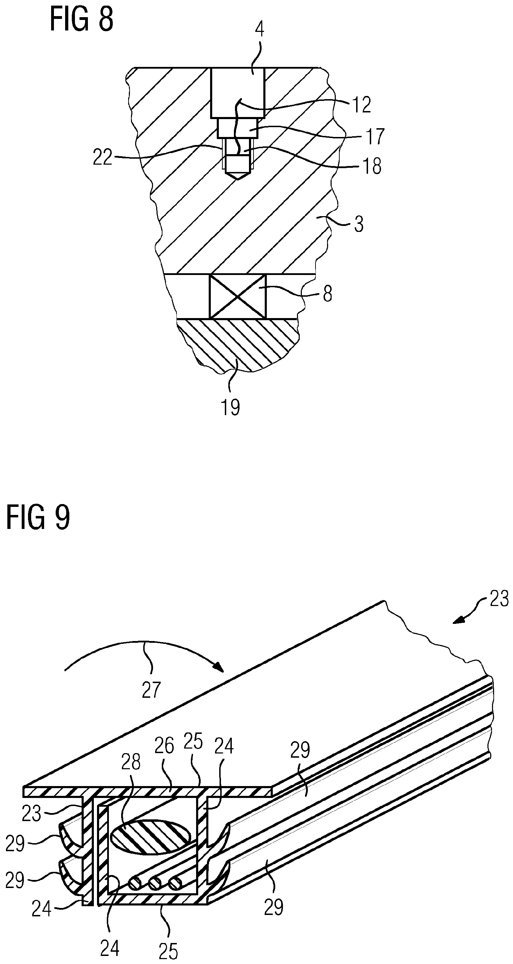

Gemäß FIG 8 erstreckt sich ausgehend von der Kabelaufnahmenut 4 abwärts ein Sensoreinführkanal 17, an den sich ein Sensoraufnahmekanal 18 anschließt, der vorliegend als Sackbohrung ausgeführt und mit einem Innengewinde 21 versehen ist. In das Innengewinde 21 ist das Außengewinde 15 der in den Figuren 4 und 5 dargestellten Anordnung geschraubt. Das Sensorkabel 12 ist auch hier durch den Sensoraufnahmekanal 18, den Sensoreinführkanal 17 und die Kabelaufnahmenut 4 zur elektronischen Komponente 6 geführt, an die es angeschlossen ist.

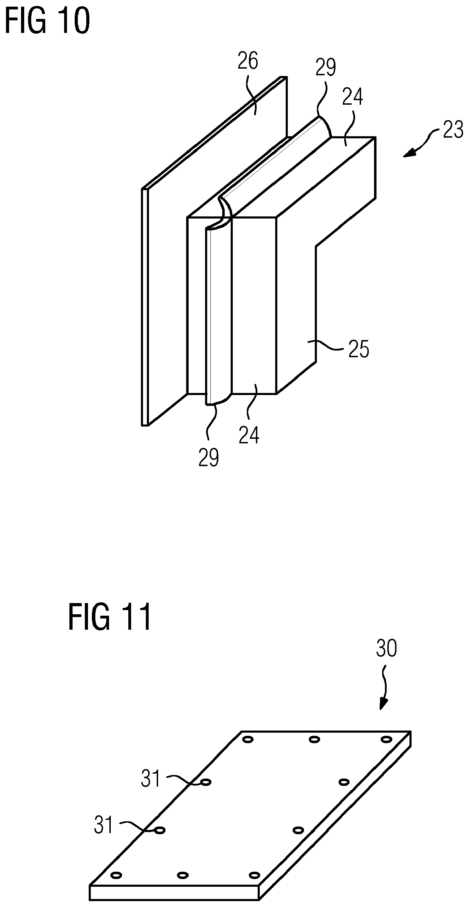

Zum Abdecken der Kabelaufnahmenut 4 sind mehrere Kabelaufnahmenutabdeckelemente 23 vorgesehen, die vorliegend sich geradlinig erstreckende Kabelaufnahmenutabdeckelemente 23 gemäß FIG 9 und L-förmig ausgebildete Kabelaufnahmenutabdeckelemente 23 gemäß FIG 10 umfassen.

Das in FIG 9 dargestellte Kabelabdeckelement 23 weist im Querschnitt betrachtet zwei sich senkrecht und parallel zueinander erstreckende Seitenwandschenkel 24, einen sich waagerecht erstreckenden und diese an ihren unteren freien Enden miteinander verbindenden Bodenschenkel 25, einen sich parallel zu dem Bodenschenkel 25 erstreckenden Abdeckschenkel 26, der an seiner Unterseite mit dem anderen freien Ende des ersten Seitenwandschenkels 24 verbunden ist und seitlich über beide Seitenwandschenkel 24 vorsteht und einen mit der Unterseite des Abdeckschenkels 26 verbundenen, sich abwärts von diesem erstreckenden, von außen an dem zweiten Seitenwandschenkel 24 anliegenden dritten Seitenwandschenkel 24 auf. Die Seitenwandschenkel 24 bilden gemeinsam mit dem Bodenschenkel 25 einen Sensorkabelaufnahmekanal, der durch den Abdeckschenkel 26 abgedeckt ist. Das Kabelaufnahmenutabdeckelement 23 ist aus einem elastischen Material hergestellt, insbesondere aus elastischem Kunststoff oder aus einem gummiartigen Material, so dass sich der Sensorkabelkanal in Richtung des Pfeils 27 elastisch aufbiegen lässt, um die Sensorkabel 12 in dem Sensorkabelkanal positionieren zu können. Die Sensorkabel 12 können innerhalb dieses Sensorkabelkanals unter Verwendung einer streifenförmigen Einlage 28 gesichert werden, die beispielsweise aus Schaumstoff hergestellt sein kann. Die Abmessungen der Einlage 28 sind dabei derart gewählt, dass sich beim Eindrücken der Einlage 28 in den Sensorkabelkanal ein Formschluss mit den benachbarten Seitenwandschenkeln 24 des Kabelaufnahmenutabdeckelements 23 ergibt. An den äußeren beiden Seitenwandschenkeln 24 sind vorliegend seitlich auswärts vorstehende Lippen 29 vorgesehen, die dazu dienen, das Kabelaufnahmenutabdeckelement 23 von oben formschlüssig und/oder wasserdicht in einen sich geradlinig erstreckenden Abschnitt der Kabelaufnahmenut 4 des Getriebegehäuses 1 einsetzen zu können. Die seitlich vorstehenden Unterseiten des Abdeckschenkels 26 können mit der Oberfläche des Getriebegehäuses 1 verklebt werden, um das Kabelaufnahmenutabdeckelement 23 am Getriebegehäuse 1 zu sichern und/oder eine wasserdichte Verbindung zu erzielen.

FIG 10 zeigt ein L-förmig ausgebildetes Kabelaufnahmenutabdeckelement 23, das dazu dient, im Eckbereich der in FIG 1 dargestellten Kabelaufnahmenut 4 eingesetzt zu werden. Der Aufbau entspricht grundsätzlich dem des in FIG 9 dargestellten Kabelaufnahmenutabdeckelementes 23.

FIG 11 zeigt eine Abdeckung 30, die dazu ausgelegt ist, die am Getriebegehäuse 1 vorgesehene Vertiefung 5 abzudecken, und entsprechenden Abmessungen aufweist. die Abdeckung 30 ist vorliegend als Metallplatte ausgebildet und mit Durchgangslöchern 31 versehen, die zur Aufnahme von nicht näher dargestellten Befestigungsschrauben dienen, um die Abdeckung 30 mit ebenfalls nicht näher dargestellten Gewindebohrungen des Getriebegehäuses 1 zu verschrauben. Die Abdeckung 30 kann an ihrer Unterseite mit einer Dichtung versehen sein, um eine wasserdichte Abdeckung der Vertiefung 5 zu erzielen.

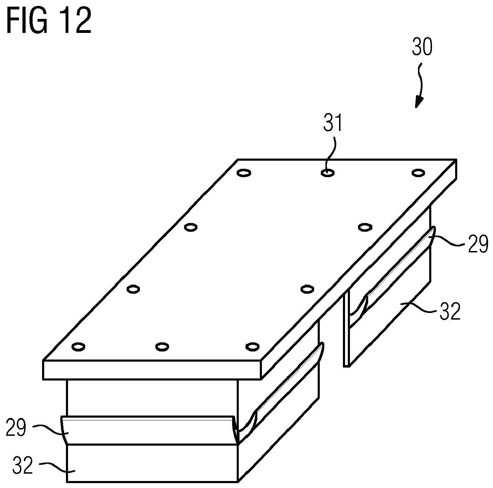

FIG 12 zeigt eine weitere Variante einer Abdeckung 30 zum Abdecken der Vertiefung 5 des Getriebegehäuses 1. Die in FIG 12 dargestellte Abdeckung 30 ist aus Kunststoff hergestellt und umfasst eine Abdeckplatte 32, von der sich abwärts mit Lippen 30 versehene Wände 33 erstrecken, deren Position derart gewählt ist, dass diese mit den Wänden der Vertiefung 5 in Eingriff kommen, wenn die Abdeckung 30 von oben in die Vertiefung 5 eingedrückt wird. Die Unterseite der Abdeckplatte kann mit der Außenfläche des Getriebegehäuses verklebt werden, sobald die Abdeckung 30 in die Vertiefung 5 eingesetzt ist, um eine sichere Befestigung und ggf. wasser- oder spritzwasserdichte Anordnung zu erzielen.

Die in den Sensoraufnahmehülse 9 aufgenommenen Sensoren 7, die Kabelaufnahmenutabdeckelemente und die Abdeckungen bilden vorteilhaft Bestandteile eines erfindungsgemäßen Sensormontagekits.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Getriebegehäuse (1), **dadurch gekennzeichnet, dass** dieses an seiner Außenseite mit zumindest einer von außen zugänglichen Kabelaufnahmenut (4) versehen ist.

2. Getriebegehäuse (1) nach Anspruch 1, **dadurch gekennzeichnet, dass** die zumindest eine Kabelaufnahmenut (4) gießtechnisch hergestellt ist.

3. Getriebegehäuse (1) nach einem der vorhergehenden Ansprüche, **dadurch gekennzeichnet, dass** die zumindest eine Kabelaufnahmenut (4) einen quadratischen oder rechteckigen Querschnitt aufweist.

4. Getriebegehäuse (1) nach einem der vorhergehenden Ansprüche, **dadurch gekennzeichnet, dass** dieses an seiner Außenseite mit zumindest einer von außen zugänglichen Vertiefung (5) versehen ist, in welche die zumindest eine Kabelaufnahmenut (4) mündet und die zur Aufnahme wenigstens einer elektronischen Komponente (6) ausgelegt ist.

5. Getriebegehäuse (1) nach einem der vorhergehenden Ansprüche, **dadurch gekennzeichnet, dass** zumindest ein bevorzugt zylindrisch ausgebildeter Sensoreinführkanal (17) vorgesehen ist, der sich ausgehend vom Boden der Kabelaufnahmenut (4) einwärts erstreckt und insbesondere gießtechnisch hergestellt ist.

6. Getriebegehäuse (1) nach Anspruch 5, **dadurch gekennzeichnet, dass** sich an den Sensoreinführkanal (17) ein Sensoraufnahmekanal (18) in Form einer Bohrung anschließt, die mit einem Innengewinde (21) versehen sein kann.

7. Sensormontagekit zur Montage zumindest eines Sensors (7) an einem Getriebegehäuse (1) nach einem der vorhergehenden Ansprüche, umfassend zumindest einen Sensor (7), zumindest ein an den Sensor (7) angeschlossenes Sensorkabel (12) und mehrere Kabelaufnahmenutabdeckelemente (23), deren Außenabmessungen derart an die am Getriebegehäuse (1) vorgesehene Kabelaufnahmenut (4) angepasst sind, dass mit ihnen die Kabelaufnahmenut (4) abgedeckt werden kann.

8. Sensormontagekit nach Anspruch 7, **dadurch gekennzeichnet, dass** der zumindest eine Sensor (7) im Innern einer becherartig ausgebildeten Sensoraufnahmehülse (9) mit zylindrischem Außenumfang wasserdicht aufgenommen und das mit dem Sensor (7) verbundene Sensorkabel (12) zu einer ersten Seite aus der Sensoraufnahmehülse (9) herausgeführt ist, wobei die zweite Seite der Sensoraufnahmehülse (9) bevorzugt in Form einer kegelförmig zulaufenden Spitze (11) ausgebildet ist.

9. Sensormontagekit nach Anspruch 8, **dadurch gekennzeichnet, dass** die Sensoraufnahmehülse (9) entlang ihres Außenumfangs mit einer Dichtungsringaufnahmenut (13) versehen ist, in die ein Dichtungsring (14) eingesetzt ist.

10. Sensormontagekit nach Anspruch 8 oder 9, **dadurch gekennzeichnet, dass** die Sensoraufnahmehülse (9) mit einem Außengewinde (15) versehen ist, und dass an der ersten Seite der Sensoraufnahmehülse (9) eine Schraubendreher- oder Werkzeugaufnahmevertiefung (16) ausgebildet ist.

11. Sensormontagekit nach einem der Ansprüche 7 bis 10, **dadurch gekennzeichnet, dass** mehrere Sensoren (7) vorgesehen sind, an denen Sensorkabel (12) unterschiedlicher Längen angeschlossen sind.

12. Sensormontagekit nach einem der Ansprüche 7 bis 11, **dadurch gekennzeichnet, dass** sich geradlinig erstreckende Kabelaufnahmenutabdeckelemente (23) vorgesehen sind.

13. Sensormontagekit nach Anspruch 12, **dadurch gekennzeichnet, dass** die geradlinigen Kabelaufnahmenutabdeckelemente (23) im Querschnitt betrachtet zwei sich senkrecht und parallel zueinander erstreckende Seitenwandschenkel (24), einen sich waagerecht erstreckenden und diese an ihren unteren freien Enden miteinander verbundenen Bodenschenkel (25), einen sich parallel zu dem Bodenschenkel (25) erstreckenden Abdeckschenkel (26), der an seiner Unterseite mit dem anderen freien Ende des ersten Seitenwandschenkels (24) verbunden ist und seitlich über beide Seitenwandschenkel (24) vorsteht, und einen mit der Unterseite des Abdeckschenkels (26) verbundenen, sich abwärts von diesem erstreckenden, von außen an dem zweiten Seitenwandschenkel (24) anliegenden dritten Seitenwandschenkel (24) umfasst.

14. Sensormontagekit nach einem der Ansprüche 7 bis 13, **dadurch gekennzeichnet, dass** L-förmig oder gebogen ausgebildete Kabelaufnahmenutabdeckelemente (23) vorgesehen sind.

15. Sensormontagekit nach Anspruch 13 oder 14, **dadurch gekennzeichnet, dass** die Kabelaufnahmenutabdeckelemente (23) an ihrem Außenumfang mit seitlich vorstehenden Lippen (29) versehen sind.

16. Sensormontagekit nach einem der Ansprüche 7 bis 15, **dadurch gekennzeichnet, dass** das Sensormontagekit zumindest eine elektronische Komponente (6) aufweist, insbesondere in Form eines drahtlos sendenden Sensor-Gateway, an deren Außenabmessungen die Abmessungen der Vertiefung (5) des Getriebegehäuses (1) angepasst ist.

17. Sensormontagekit nach Anspruch 16, **dadurch gekennzeichnet, dass** dieses eine Abdeckung (30) zum Abdecken der Vertiefung des Getriebegehäuses (1) aufweist, die mit seitlich vorstehenden Lippen (29) versehen sein kann.

18. Getriebe mit einem Getriebegehäuse (1) nach einem der Ansprüche 1 bis 6 und zumindest einem an dem Getriebegehäuse (1) unter Verwendung eines Sensormontagekits nach einem der Ansprüche 7 bis 17 montierten Sensor (7).
